## Europäisches Patentamt

## European Patent Office

## Office européen des brevets

(11) Publication number: **0 142 565**
**B1**

(12) **EUROPEAN PATENT SPECIFICATION**

(45) Date of publication of patent specification: **22.11.90**

(21) Application number: **84901221.6**

(22) Date of filing: **17.03.84**

(86) International application number:
**PCT/JP84/00112**

(87) International publication number:
**WO 84/03789 27.09.84 Gazette 84/23**

(51) Int. Cl.⁵: **G 11 B 15/66, G 11 B 15/60**

(54) **MAGNETIC RECORDING AND REPRODUCING APPARATUS.**

(30) Priority: **18.03.83 JP 45755/83**

(43) Date of publication of application:
**29.05.85 Bulletin 85/22**

(45) Publication of the grant of the patent:
**22.11.90 Bulletin 90/47**

(84) Designated Contracting States:
**DE FR GB NL**

(56) References cited:
**DE-A-3 308 110**   **JP-A-56 115 082**
**FR-A-2 458 127**   **JP-A-57 169 963**
**GB-A-2 094 542**   **JP-B- 504 128**
**GB-A-2 096 817**   **JP-U-5 028 720**
**JP-A- 501 704**   **JP-U-57 497 64**
**JP-A-5 034 514**   **US-A-3 784 761**
**JP-A-5 173 411**   **US-A-3 825 944**
**JP-A-50 870 10**   **US-A-3 864 742**

(73) Proprietor: **SONY CORPORATION**
**7-35 Kitashinagawa 6-Chome Shinagawa-ku Tokyo 141 (JP)**

(72) Inventor: **MATSUMOTO, Yoshiharu**
**Sony Corp. 7-35, Kitashinagawa 6-chome Shinagawa-ku Tokyo 141 (JP)**
Inventor: **KUMAGAI, Atuhiro**
**Sony Corp. 7-35, Kitashinagawa 6-chome Shinagawa-ku Tokyo 141 (JP)**
Inventor: **OTA, Shuichi**
**Sony Corp. 7-35, Kitashinagawa 6-chome Shinagawa-ku Tokyo 141 (JP)**

(74) Representative: **Thomas, Christopher Hugo et al**
**D Young & Co 10 Staple Inn London WC1V 7RD (GB)**

Courier Press, Leamington Spa, England.

## Description

This invention relates to magnetic recording and reproducing apparatus.

In a magnetic recording and reproducing apparatus, a magnetic tape is placed on and travels on the outer periphery of a tape guide drum equipped with rotary magnetic heads, for recording image signals or the like information signals or reproducing image signals already recorded on the magnetic tape. When the tape is placed on the guide drum, it is folded intricately with the aid of tape guides and placed about the periphery of the guide drum over an angular extent of more than 180°. Thus, when left for a prolonged time in the loaded state, it can easily become adhered to the guide drum surface.

U.S. Patent Specification US-A-3 784 761 discloses magnetic recording and reproducing apparatus having features generally similar to that of the pre-characterizing fact of Claim 1, wherein U.S. Patent Specification US-A-3 864 742 discloses magnetic recording and reproducing apparatus having a tape loading ring mounted at an angle to the place in which a ring gear face rotating the loading ring is mounted.

According to the present invention there is provided a magnetic recording and reproducing apparatus comprising:

a tape guide drum provided with rotary magnetic heads;

a loading ring, rotatable by rotational driving means, for winding a magnetic tape on the periphery of said tape guide drum;

tape guide means for drawing out said tape from a cassette and guiding said tape from a tape mounting section towards and along a predetermined tape path in a direction around said tape guide drum (2), said loading ring intercepting said tape guided by said tape guide means for winding said tape around the periphery of said tape guide drum; and

a loading lever operated by said rotational driving means for moving said tape guide means;

characterized by:

said rotational driving means comprising a planetary gearing unit;

a tape tension regulator contacting said tape drawn out by said tape guide means and cooperating with said loading lever; and

means cooperating with said loading lever and driven by said planetary gearing unit for moving said tape tension regulator between an unloading position and a loading position in response to the motion of said loading lever, whereby the winding of said tape on said tape guide drum is released by rotationally driving said loading ring by said planetary gearing unit, and said loading lever is then operated for shifting said tape tension regulator and said tape guide means to their respective unloading positions out of engagement with said tape for returning said tape towards said tape mounting section.

The invention will now be described by way of example with reference to the accompanying drawings, throughout which like parts are referred to by like references, and in which:

Figure 1 is a plan view of an embodiment of magnetic recording and reproducing apparatus according to the present invention in the state of tape loading;

Figure 2 is an exploded perspective view of a loading lever unit;

Figure 3 is a plan view of the loading lever unit;

Figure 4 is a side elevation of the loading lever unit;

Figure 5 is an exploded perspective view of a tension regulator and related parts;

Figure 6 is a plan view of a planetary gearing;

Figure 7 is a sectional view of the planetary gearing;

Figure 8 is a plan view of a loading ring and a ring gear;

Figure 9 is a side view of the loading ring and the ring gear;

Figure 10 is a plan view of the loading lever unit when shifted to a guide position;

Figure 11 is a plan view of the ring gear of the planetary gearing when rotated in a forward direction;

Figure 12 is a plan view of the planetary gearing when the ring gear has completed its forward revolution;

Figure 13 is a plan view of the operating state of the tension regulator during loading;

Figure 14 is a plan view of the tension regulator in the recording reproducing state;

Figure 15 is a plan view of the planetary gearing during unloading rotation of the loading ring;

Figure 16 is a plan view of the loading gear in the unloading state;

Figure 17 is a plan view showing a cassette lock release lever being released by the planetary gearing;

Figure 18 is a plan view of a contactor of a switch unit controlling the rotation of a driving electric motor; and

Figure 19 is a plan view of a switch pattern of the switch unit.

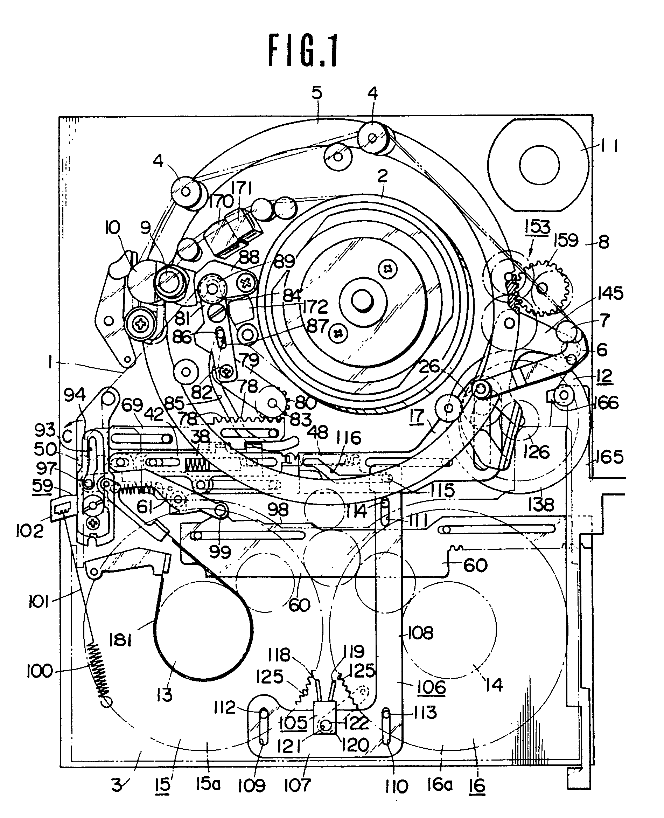

Referring to the drawings, the embodiment of magnetic recording and reproducing apparatus has a tape guide drum 2 around which a magnetic tape 1 drawn out from a tape cassette 3 is mounted within a tape mounting section as shown in Figure 1 is wound in the form of a letter U and over an angular extent of more than 180°. The guide drum 2 comprises an upper drum driven in rotation by a drum driving electric motor, and a stationary lower drum. A rotary magnetic head is mounted on said upper drum so that its foremost part projects slightly from the upper drum for magnetic recording on or reproduction from the tape 1. On the outer periphery of the guide drum 2 is rotatably mounted a loading ring 5 by means of which the tape 1 drawn out from the cassette 3 is guided so as to be wounded about the outer periphery of the guide drum 2. The loading ring 5 is provided with a plurality of upright guide roller 4, a guide roller 7 mounted on the foremost part of a rotatably journaled arm 6, and a pinch roller 10 co-operating with a capstan 9 is mounted upright on a chassis plate 8 for clamping the tape 1 and causing it to travel at a constant speed. The loading ring 5 is driven in rotation by a planetary gearing 12 driven by a loading electric motor 11, such that the tape 1 placed about the guide roller 4 and 7 is wound about the guide drum 2.

On the side opposite to the guide drum 2, there is provided a cassette mounting section on which the cassette 3 is mounted and which is provided with a cassette holder by which the mounted cassette 3 is held in position and raised back towards a cassette insertion opening of the main body of the apparatus when the cassette 3 is to be ejected. The cassette mounting section is provided with a pair of reel blocks 13 and 14 and the cassette 3 is mounted in such a manner that a tape supply reel 15 about which the tape 1 is wound and a tape winding reel 16 are fitted to the associated reel blocks 13 and 14, respectively.

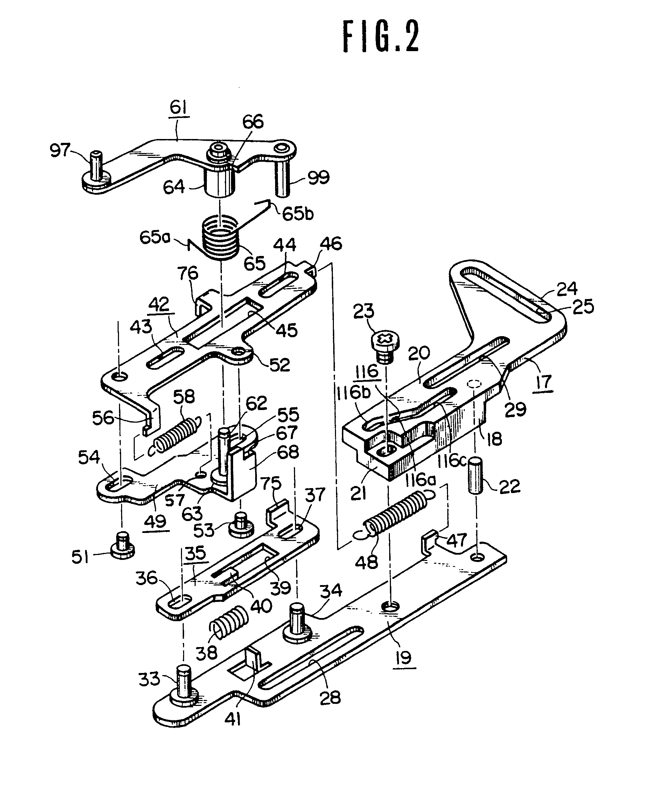

Between the cassette mounting section and the guide drum 2, there is mounted a loading lever unit including a loading lever 17 that can be reciprocated by the planetary gearing 12 along a front opening of the cassette 3. The loading lever 17 is formed by a substantially L-shaped first lever section 18 and a straight second lever section 19, as shown in Figure 2. The lever sections 18 and 19 are connected by a connecting pin 22 and a connecting screw 23 with one side of the second lever section 19 over-lapping the underside of a step 21 formed on one side on the underside of a horizontal section 20 of the first lever section 18. The loading lever 17 is so mounted that a gear shaft 27 of a planetary gear 26 of the planetary gearing 12 is introduced through an elongated opening 25 having its long axis aligned with the longitudinal direction of a vertical section 24 of the first lever section 18, and supporting pins 31 and 32 mounted upright on the chassis plate 8 are introduced through elongated openings 28 and 29 having their long axes aligned with the longitudinal direction of the horizontal section 20 of the first lever section 18 and with the longitudinal direction of the second lever section 19, respectively. By driving the planetary gearing 12, the loading lever 17 is horizontally reciprocated with the pins 31 and 32 being guided along the opening 28 and 29. A pair of guide shafts 33 and 34 are mounted upright on the second lever section 19. A folding guide operating lever 35 for causing the travel of a folding guide unit to be later described is mounted by the guide shafts 33 and 34. The folding lever 35 is superimposed on the second lever section 19 such that the guide shafts 33 and 34 are introduced into elongated openings 36 and 37 having their axes aligned with the longitudinal direction of the folding lever 35 so as to be slidable over the extent of the openings 36 and 37. The folding lever 35 has a central through-opening 39 for receiving a coil spring 38. A projection 40 is formed on one side of the opening 39 for engaging one end of the spring 38. A second projection 41 is formed by partially cutting and erecting a mid-portion of the second lever section 19 for confronting the projection 40. The spring 38 is retained at one end by the projection 40 and at the other by the projection 41. Thus, the folding lever 35 is biased by the spring 38 towards the foremost part of the loading lever 17.

A sub-loading lever 42 is mounted by the pair guide shafts 33 and 34 on the second lever section 19 for overlapping with the folding lever 35. As is the folding lever 35, the sub-loading lever 42 is slidably mounted within the extent of elongated openings 43 and 44, by having the guide shafts 33 and 34 introduced into the openings 43 and 44 having their long axes in the longitudinal direction of the sub-loading lever 43. The sub-loading lever 42 has an elongated centre opening 45 for partially accommodating the spring 38. An engaging portion 46 is formed by bending the end of the sub-loading lever 42 opposite to the first lever section 18. The sub-loading lever is biased towards the first lever section 18 by a tension spring 48 placed between the engaging portion 46 and a second engaging portion 47 formed by bending up an end part of the second lever section 19.

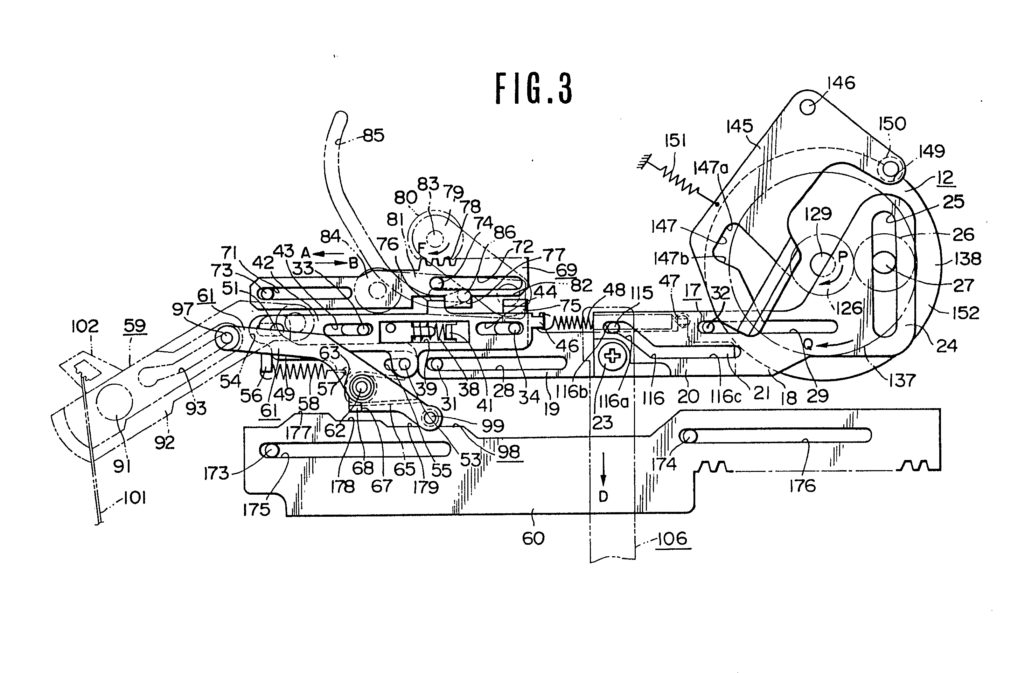

A tension regulator operating lever 49 is slidably mounted on the forward lower surface on the sub-loading lever 42. The tension lever 49 is mounted such that a guide pin 51 is passed through an elongated opening 54 in the tension lever 49 and through an opening at the forward part of the sub-loading lever 42 to be riveted thereat, and another guide pin 53 is passed through an elongated opening 55 in the tension lever 49 and through an opening in a central side lug 52 of the sub-loading lever 42 to be riveted thereat, the opening 54 and 55 having their long axes aligned with the longitudinal direction of the tension lever 49. The tension lever 49 is biased towards the forward part of the sub-loading lever 49 by a tension spring 58 mounted under tension between a foremost downward lug 56 of the sub-loading lever and a central engaging opening 57 in the tension lever 49. As shown in Figure 1 a stop 50 is mounted at a position facing the foremost part of the tension lever 49 for regulating its movement during loading. The tension lever 49 is mounted across the foremost and lateral sides of the sub-loading lever 42, so that it has its foremost side bent in an L-shape. The tension lever 49 has a central arm shaft mounting side lug 63 having an upright arm shaft 62 rotatably carrying a tension regulator rotary arm 61. In dependence upon reciprocating movement of the tension lever 49, the tension regulator arm 61 causes a tension regulator 59 to be rotated from a first unloading position in which the tape 1 is received into cassette 3 to a second loading position in which the tape 1 is extracted. In addition, the position of the tension regulator 59 operated in rotation by a mode selector lever 60 slidably operated in dependence upon the selected operating mode of the apparatus is variably set by the tension regulator arm 61. The arm shaft 62 is mounted upright on the lug 63 by having its lower end riveted in a mounting hole in the lug 63. The tension regulator arm 61 attached to the arm shaft 62 is U-shaped and has a central through-opening in which a cylindrical boss 64 is received and riveted. The boss 64 is placed over the arm shaft 62 and thus rotatably mounted to the shaft 62. A coil spring 65 is placed around the boss 64. The spring 65 has one end 65a engaged by one side of the tension lever 49 and has a hooked engaging part 65b at the other end so that the spring 65 is engaged there by one side of the tension regulator arm 61 and wound about the boss 64. The spring 65 thus causes the tension regulator arm 61 to rotate clockwise in Figure 3. The foremost part of the lug 63 has an upright engaging lug 68 having an end step 67 engaging with an engaging central lug 66 of the tension rotary arm 61 for regulating its rotational position as biased into rotation by the spring 65.

A rack plate 69 slid by the folding lever 35 for shifting the folding guide unit is mounted along the sides of the folding lever 35 and the sub-loading lever 42 facing the guide drum 2, as shown in Figure 3. The rack plate 69 is supported in such a manner that supporting pins 73 and 74 mounted upright on the chassis plate 8 are introduced into elongated openings 71 and 72 having their long axes in the longitudinal direction of the rack plate 69 and shifted within the range of the openings 71 and 72. On the side of the rack plate 69 facing the folding lever 35 and the sub-loading lever 42, the rack plate 69 is formed with a projection 77 which may be selectively engaged during shifting by a foremost lateral 35 upright thrust projection 75 of the lever 35 and a central depending thrust projection 76 of the sub-loading lever 42, and which may thereby be subjected to a thrust pressure. Thus, during loading of the tape 1, the projection 77 is pushed by the projection 75 so that the rack plate 69 is shifted in the direction A in Figure 3. During unloading of the tape 1, the projection 77 is pushed by the projection 76 so that the rack plate 69 is shifted in the direction B in Figure 3. On the side of the rack plate 69 opposite to the projection 77, the rack plate 69 is formed with a rack gear 78 meshing with a rotary gear 80 formed at the bottom end of a first folding guide lever 79 constituting a folding guide unit.

The folding guide unit is provided along one side of the guide drum 2 and has the first folding guide lever 79 and a second folding guide lever 81. The second folding lever 81 has its bottom end rotatably connected by a pivot pin 82 to the forward part of the first folding lever 79 so that it can be folded against the first folding lever 79 about the pivot pin 82. The first folding lever 79 is carried by an upright supporting pin 83 on the chassis plate 8 as one with the rotary gear 80, so that it can be driven in rotation in unison with rotation of the rotary gear 80. A guide pole 84 about which the tape 1 is wound is erected upright at the foremost part of the second folding lever 81, and a guide pin 86 is mounted at a central part of the second folding lever 81 for engaging in a folding guide lever guide slot 85 in the chassis plate 8 for guiding the second folding lever 81. The guide pin 86 is movable within the range of an elongated opening 87. Thus, when the first folding lever 79 is driven in rotation, the second folding lever 81 is shifted with the pin 86 guided in the slot 85 such that, during loading of the tape 1, the second folding lever 81 is shifted so as to be extended away from the cassette mounting section and along one side of the guide drum 2 for guiding the tape 1 around the periphery there of a stop 88 for regulating the position of extension of the second folding lever 81 is provided laterally of the guide drum 2 and adjacent to the end of the travel path of the second folding lever 81. The one edge of the stop 88 is formed with an engaging groove 89 into which the pole 84 on the second folding lever 81 is engaged, so that, when the second folding lever 81 is extended along one side of the guide drum 2 for loading the tape 1 in the predetermined tape route, at one end of the pole 84 is engaged in the groove 89 for regulating the extended position of the second folding lever 81.

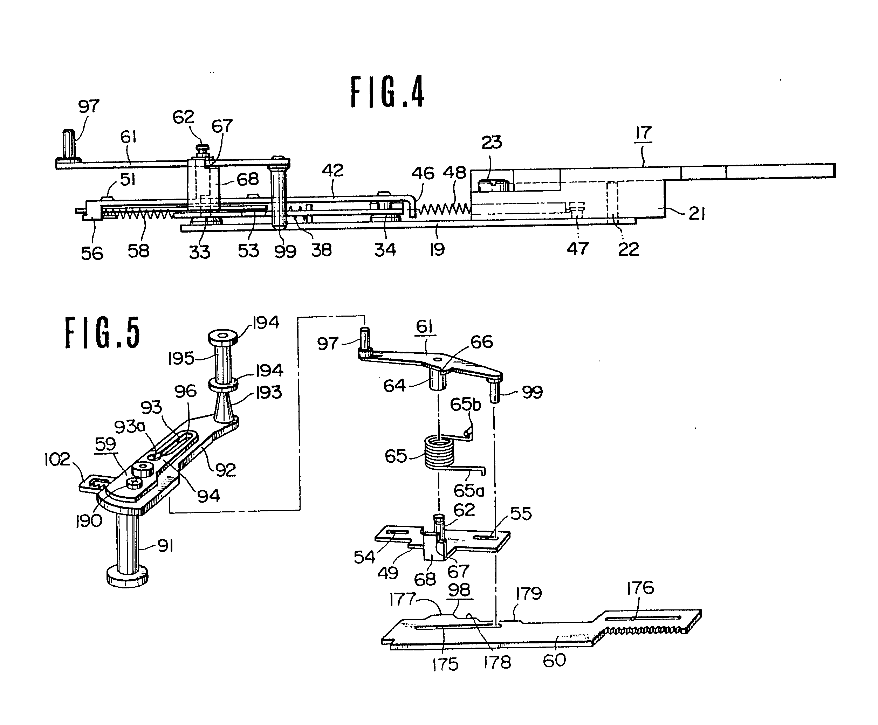

The tension regulator 59, variably operated by the tension regulator arm 61, is mounted, as shown in Figure 1, at the tape extracting side of the cassette mounting section which is the forward side of the loading lever unit. The tension regulator 59 is constructed as shown in Figure 5. The tension regulator 59 has a tension regulator arm 92 having its bottom end rotatably carried by a supporting post 91 mounted upright on the chassis plate 8. The tension regulator arm 92 has a central elongated opening 96 having its long axis in the longitudinal direction of the tension regulator arm 92 and a terminal supporting post 193 on which is mounted a guide pin 195 delimited by flanges 194, 194. The tape 1 is guided in sliding contact with the pin 195. On the upper surface of the tension regulator arm 92, a cam plate 94 formed with a cam groove 93 is attached by a screw 190. The cam plate 94 is mounted with the cam groove 93 in register with the opening 96. An upright engaging pin 97 mounted on one end of the tension regulator arm 61 is introduced into the cam groove 93. As the tension regulator arm 61 is reciprocated by the tension lever 49 which in turn is operated by the loading lever 17, the tension regulator arm 92 is rotated about the post 91 as the pin 97 is shifted along the cam groove 93. A depending engaging pin 99 is provided to the other end of the tension regulator arm 61 for engaging with a stepped cam surface 98 on the mode selector lever 60. When the tension regulator arm 61 has been rotated to the second loading position, the mode selector lever 60 is slid as a function of the selected operating mode of the apparatus so that the pin 99 is engaged with a cam surface section of the cam surface 98 associated with the selected operating mode. In this manner, the tension regulator arm 61 is turned about the arm shaft 62 and the engaging position of the pin 97 of the tension regulator arm 61 within the cam groove 93 is shifted for causing the tension regulator arm 92 to be rotated as a function of the selected operating mode. The cam groove 93 has an enlarged diameter portion 93a towards the bottom end of the tension regulator arm 92 and the pin 97 is loosely engaged in the portion 93a.

One side of the tension regulator arm 92 is formed with a projecting retainer 102 for retaining one end of the connecting member 101 extended from one end of a tension spring 100, the other end of which is affixed to the chassis plate 8, such that the tension regulator arm 92 is biased so as to be turned in the direction C in Figure 1 under the force of the spring 100, so that it acts as a tension regulator for placing a predetermined tension on the tape 1 travelling in the loading state.

Operatively associated with the loading lever 17 for driving the loading lever is a reel lock release lever 106 which operates for releasing a reel lock unit 105 which operates in turn to lock the tape supply reel 15 and the tape take-up reel 16 of the cassette 3 mounted in the cassette mounting section. The lock release lever 106 is in the form of an elongated letter L and is provided with elongated openings 109, 110 and 111 at the foremost part of the horizontal lever section 107 and at the upper and lower ends of a vertical lever section 108, having their long axes in the longitudinal direction of the lock release lever 106. Upright supporting pins 112, 113 and 114 on the chassis plate 8 are introduced and engaged in the openings 109, 110 and 111 for sliding vertically in Figure 1. An upright engaging pin 115 at the foremost part of the vertical lever section 108 is engaged in a cam groove 116 formed in the first lever section 18 of the loading lever 17. The cam groove 116 is formed as a step in the driving direction of the loading lever 17 and, with reciprocation of the loading lever 17, the lock release lever 106 is moved vertically in Figure 1. The central section of the horizontal lever section 107 is provided with an engaging pin 122 engaging in an opening 121 in a lock pawl mounting element 120 carrying reel lock pawls 118, 119 of the reel lock unit 105 provided in the cassette 3. When the cassette 3 is mounted in position, the lock pawl mounting element 120 is engaged with the pin 122 via the opening 121. When the lock release lever 106 is moved vertically in Figure 1, the lock pawl mounting element 120 is moved vertically in unison therewith and the pair of pawls 118 and 119 performs a switching operation so that the pawls 118 and 119 are engaged with or disengaged from an engaging ratchet portion 125 formed at the rim of flangers 15a and 16a of the reels 15 and 16, respectively.

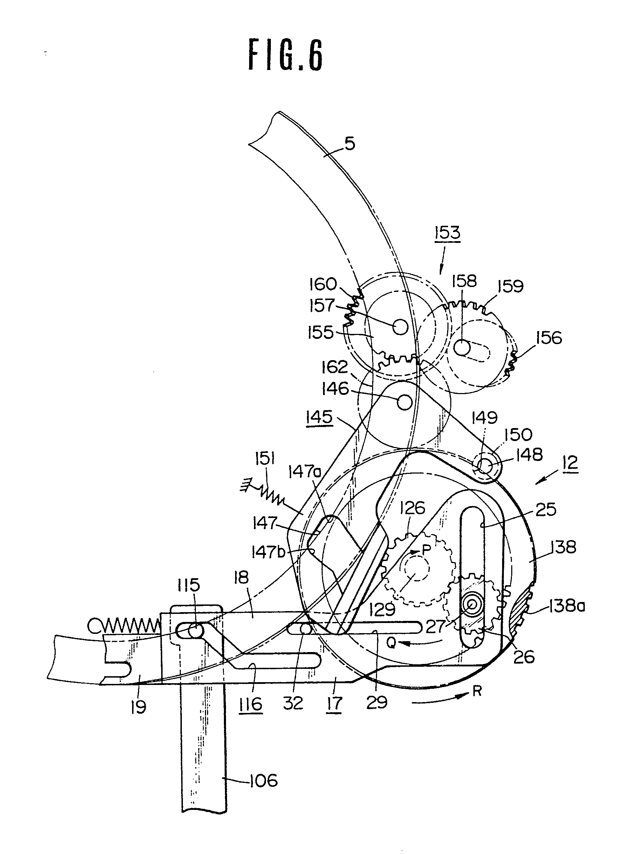

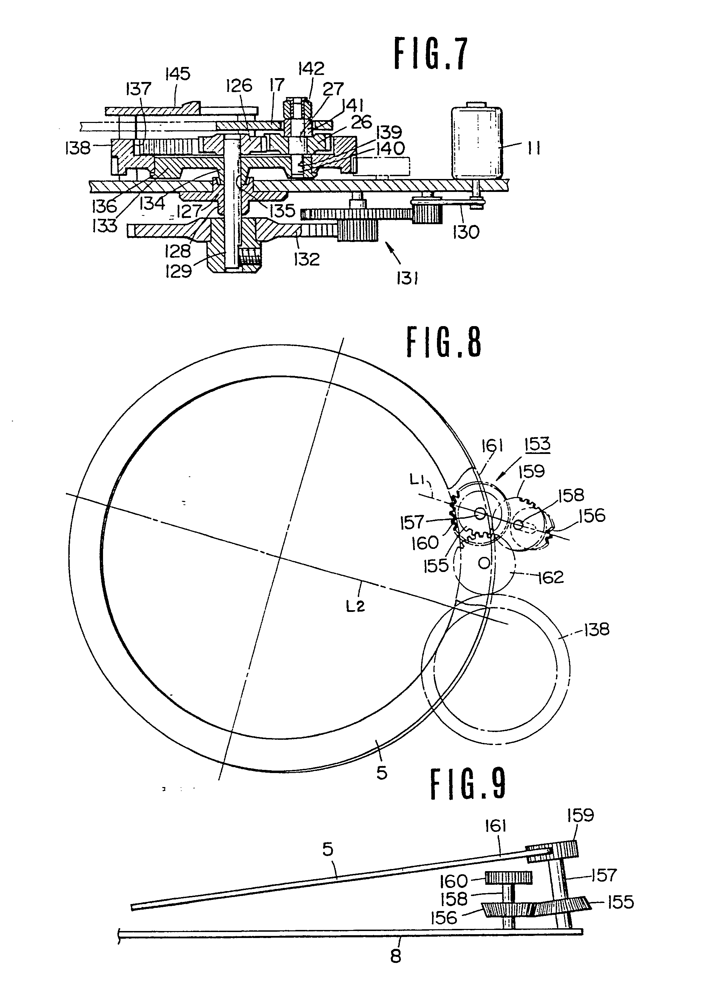

The planetary gearing 12 driven by the single motor 11 is constructed as described below and is operatively linked to the loading lever 17 and the loading ring 5. As shown in Figures 6 and 7, the planetary gearing 12 has a sun gear 126 fitted into a cylindrical boss 128 of a bracket 127 fixed to the chassis plate 8. The sun gear 126 is fitted integrally to the foremost part of the driving shaft 129 which is introduced through the boss 128, and which is rotatably carried with respect to the bracket 127. To the lower end of the driving shaft 129 there is fixed a gear 132 to which the driving force of the loading electric motor 11 is transmitted via a transmission belt 130 and a connection gearing 131. Thus the sun gear 126 is driven in rotation in accordance with forward or reverse rotation of the loading electric motor 11.

On the driving shaft 129 there is rotatably mounted a planet gear mounting plate 133 in the form of a disc, the plate 133 carrying the planet gear 26 and having a central hub 134 and a through-opening 135 for passage of the driving shaft 129. Thus the plate 133 is mounted for rotation and sliding relative to the driving shaft 129, so that the lower surface of the hub 134 is resting on a receptacle on the upper face of the boss 128 of the bracket 127. A ring gear 138 having upper inner peripheral teeth 137 and resting on the flange 136 of the lower periphery of the plate 133 is mounted for rotation in sliding contact with plate 133. The planetary gear 26 is mounted on the plate 133 between the sun gear 126 and the ring gear 138. The planetary gear 26 is rotatably mounted on the gear shaft 27 which has a reduced-diameter portion 140 press-fitted into a through-hole 139 formed in the plate 133. The planetary gear 26 meshes with the sun gear 126 and the ring gear 138 and rotates about the sun gear 126. The gear shaft 27 carrying the planetary gear 26 also carries two cylindrical rollers 141 and 142.

In the planetary gearing 12, supposing that the driving force is transmitted from the driving motor 11 for causing the sun gear 126 to be rotated in the clockwise direction P in Figure 6, a force is transmitted to the planetary gear 26 which causes it to be rotated about the sun gear 126 clockwise Q in Figure 6, while it is also transmitted to the ring gear 138 as a force which will cause it to be rotated counter clockwise R in Figure 6. On the other hand, when a force which will cause the sun gear 126 to be rotated counter clockwise (opposite to P in Figure 6) is transmitted to the sun gear 126, the force is transmitted to the planetary gear 26 as a force which causes counter clockwise rotation opposite to Q in Figure 6 of the planetary gear 26, while it is transmitted to the ring gear 138 as a force causing clockwise rotation opposite to R in Figure 6 of the ring gear 138.

The loading lever 17 is mounted in position with the roller 141 of the gear shaft 27 of the planetary gear 26 of the planetary gearing 12 fitted in the opening 25 in the vertical lever section 24. Thus, when the planetary gear 26 is rotated about the sun gear 126, the loading lever 17 is reciprocated by a distance equal to the diameter of the circular orbit of the planetary gear 26.

On the upper surface of the planetary gearing 12, a switching arm 145 is provided in superimposed relation on the ring gear 138. As shown in Figure 6, the switching arm 145 has its corner rotatably carried by a stud 146 mounted upright on the chassis plate 8, and has a recessed engaging portion 147 opening towards one side thereof and within the circular orbit of the gear shaft 27 carrying the planetary gear 26. The rotation of the planetary gear 26 about the sun gear 126 is inhibited when the upper roller 142 is engaged with the portion 147. The portion 147 has a first engaging part 147a engaged with the gear shaft 27 of the planetary gear 26 when the latter is rotated in the forward direction for inhibiting the forward rotation of the planetary gear 26, and a second engaging part 147b engaging with the gear shaft 27 of the planetary gear 26 when the latter is rotating in the reverse direction for inhibiting reverse rotation of the planetary gear 26. The opposite side edge of the switching lever 145 has an engaging member 150 comprising a stud 148 and a roller fitted thereto for engaging with a recess 149 formed on the outer periphery of the ring gear 138. The engaging means 150 is biased by a spring 151 to be turned towards the periphery of the ring gear 138 so that, as the ring gear 138 is rotated and the engaging member 150 reaches the position corresponding to the recess 149 of the ring gear 138, the engaging member 150 is engaged with the recess 149 for inhibiting rotation of the ring gear 138.

The lower outer periphery of the ring gear 138 is formed with a gear 152 to which the loading ring 5 is connected through connection gearing 153.

It should be noted that the loading ring 5 is mounted at an angle relative to the chassis plate 8 on which the planetary gearing 12 and the associated parts are mounted, in order that the size and mounting space of the loading ring is minimized and the tape 1 may be placed around the periphery of the guide drum 2 over an angular extent more than 180°. The ring gear 138 and the loading ring 5 inclined relative to the chassis plate 8 are connected together by the connection gearing 153 constructed as shown in Figures 8 and 9. There are provided a first bevel gear 155 and a second bevel gear 156 meshing with each other. The first bevel gear 155 is mounted on a gear shaft 157 perpendicular to the plane of the loading ring 5, and the second bevel gear 156 is mounted on a gear shaft 158 perpendicular to the chassis plate 8 which is coplanar with the ring gear 138. The shafts 157 and 158 are mounted in such a manner that a straight line L1 interconnecting the gear shafts is parallel to a straight line L2 indicative of the maximum inclination of the loading ring 5 relative to the chassis plate 8. Thus the loading ring 5 and the ring gear 138 which are not coplanar with one another may be connected together by having a first spur gear 159 and a second spur gear 160 mounted respectively on the shafts 157 and 158. It is thus possible to interconnect the loading ring 5 and the planetary gearing 12 by the connection gearing 153, such that the first spur gear 159 meshes with a spur gear 161 formed on the periphery of the loading ring 5 and the second spur gear 160 meshes with a counter spur gear 162 meshing in turn with a spur gear 138a of the ring gear 138.

Although the loading ring 5 and the planetary gearing 12 are mounted at an angle to each other, they can be connected together by means of the connection gearing 153, and the spur gears 161 and 138a can be machined easily, resulting in the loading ring 5 and the planetary gearing 12 being of higher precision and the connection gearing 153 being of smaller and simpler design.

In the circular orbit of the planetary gear 26 of the planetary gearing 12, an engaging pawl piece 166 is provided facing the forward end of the cassette lock release lever 165 which is positioned along one side of the cassette mounting section as shown in Figure 1 and which releases the lock of the cassette holder holding the cassette 3 within the cassette holding section. The release lever 165 is operated in such a manner that, when the planetary gear 26 is rotated along its circular orbit for tape unloading, that is, for withdrawing the tape 1 into the cassette 3, the release lever 165 is acted upon by the gear shaft 27 associated with the planetary gear 26 for releasing the lock of the cassette holder. Since it is required that this lock be released after termination of the tape unloading operation, the release lever 165 is so arranged that the planetary gear 26 is driven further for pressing the release lever 165 after the gear 26 has been driven for tape unloading.

Tape loading, that is, of extracting the tape 1 along its predetermined travel path, and tape unloading, that is, of withdrawing the thus extracted tape 1 into the cassette 3, will now be explained.

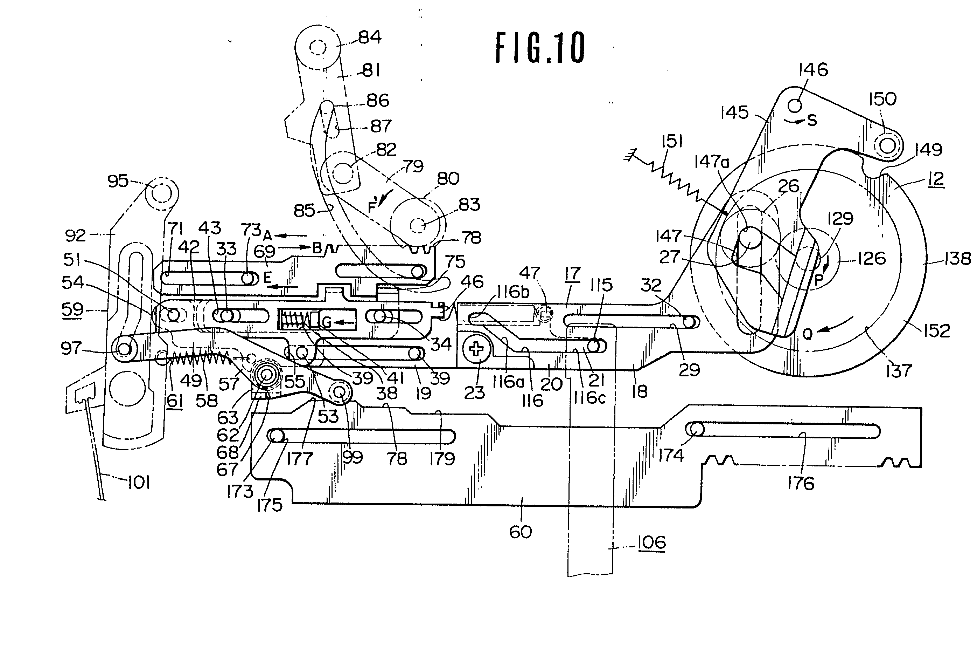

Before that start of unloading the tape 1, with the cassette 3 in place within the cassette mounting section, the planetary gear 26 of the planetary gearing 12 is placed at the extreme right position of the ring gear 138, that is, at a position in which a straight imaginary line connecting the gear shaft 129 of the sun gear 126 with the gear shaft 27 of the planetary gear 26 becomes parallel to the longitudinal direction of the loading lever 17 (Figure 3). The engaging member 150 of the switching arm 145 for switching the operation of the planetary gearing 12 is engaged with the engaging recess 149 of the ring gear 138 for inhibiting rotation of these. The planetary gear 26 for reciprocating the loading lever 17 is positioned to the extreme right position of the ring gear 138, the loading lever 17 is also at the extreme right position (Figure 3). Thus the loading lever unit, which is reciprocated by the loading lever 17, has also been shifted right in Figure 3, as indicated by B. Thus the sub-loading lever 42 has been shifted right or in the direction B in Figure 3 by the operation of the spring 48, one end of which is retained by the first lever section 18 of the loading lever 17. The rack plate 69, actuated by the sub-loading lever 42, has also been shifted right or in the direction B in Figure 3. The first and second folding levers 79 and 81 of the folding guide unit shifted by the rack plate 69 are folded about the pin 82 so that the pin 86 is situated at the bottom of the groove 85, and the pole 84 of the second folding lever 81 faces the inner surface of the tape 1, that is, the tape cassette side surface of the tape 1 which is situated along the front opening side of the cassette 3. Since the sub-loading lever 42 is shifted right in Figure 3, the tension lever 49, which is attached to the sub-loading lever 42 and biased towards the foremost part of the sub-loading lever 42 by the spring 58, has also been shifted right or in the direction B in Figure 3. The tension regulator arm 61, carried by the tension lever 49 by the arm shaft 62, has been shifted right or in the direction B in Figure 3. The tension regulator arm 92, in the cam groove 93 of which is engaged the pin 97 on one end of the tension regulator arm 61, has been turned towards the front opening side of the cassette 3 or in the direction D in Figure 3, with the post 91 as centre by the operation of the tension regulator arm 92 is facing the inner or the tape cassette side of the tape 1 which is situated along the front opening side of the cassette 3. Furthermore, when the loading lever 17 is situated at the extreme right position shown in Figure 3, the pin 115 on the vertical section 108 of the lock release lever 106 is engaged in an upper cam surface 116b which is contiguous to the left inclined cam surface 116a in Figure 3 of the cam groove 116, so that the lock release lever 106 has been shifted towards the guide drum 2. With the lock release lever 106 thus raised towards the guide drum 2, the lock pawl mounting element 120 within the cassette 3 are also raised thus causing the reel lock pawls 118 and 119 to engage the ratchet portions 125 of the reels 15 and 16 thereby locking the reels 15 and 16. The loading ring 5 is also positioned in the pre-loading rotary position in which the pinch roller 10 and the guide rollers 4 and 7 are positioned towards the front side of the cassette 3, as shown in Figure 10.

In the pre-loading state in which the cassette 3 is mounted in the cassette holding section as described above, a start switch, not shown, mounted to the apparatus is actuated for driving the loading motor 11 in the forward direction. The driving force of the loading motor 11 is transmitted via the connection gearing 131 to the gear 132 so that the sun gear 126 is rotated (P in Figure 3). Since the engaging member 150 of the switching arm 145 is engaged at this time in the recess 149 of the ring gear 138, the ring gear 138 remains deactivated and only the planetary gear 26 starts to be forward rotated (Q in Figure 3). With the planetary gear 26 thus rotating forward, the gear shaft 27 of the planetary gear 26 causes the loading lever 17 to be shifted forward in the direction A in Figure 3, while being shifted vertically in Figure 3 within the opening 25 of the loading lever 17. When the loading lever 17 starts to be shifted forwards in the direction A, the pin 115 of the lock release lever 106, so far engaged in the upper cam surface 116b of the cam groove 116 of the loading lever 17 is moved along the inclined cam surface 116a. Thus, the lock release lever 106 is gradually shifted in the direction D in Figure 3, so that the lock pawl mounting element 120 within the cassette 3 is moved away from the reels 15 and 16 for opening the pawls 118 and 119. When the pin 115 reaches a lower cam surface 116c of the cam groove 116, the pawls 118 and 119 are disengaged from the portions 125 of the flanges 15a and 16a to permit free rotation of the reels 15 and 16. With the reel lock of the cassette 3 thus released, the levers 42, 35 and 49 are shifted further forwards as one unit in the direction A in Figure 3.

Since the sub-loading lever 42 is slidably mounted with the upright guide shafts 33 and 34 on the second lever section 19 of the loading lever 17 inserted into the openings 43 and 44 and the sub-loading lever 42 is connected to the loading lever 17 via the spring 48, the sub-loading lever 42 remains deactivated until the loading lever 17 is shifted forwards and the sub-loading lever 42 is no longer subjected to the force of the spring 48. This accounts for the above described sequential operation of the reel lock release of the cassette 3 and the forward movement of the levers 42, 35 and 49.

As the planetary gear 26 is rotated further forwards along its circular orbit and the loading lever 17 is shifted forwards until the pin 115 of the lock release lever 106 reaches the lower cam surface 116c, the guide shafts 33 and 34 on the second lever section 19 of the loading lever 17 press the left-hand sides of the openings 43 and 44 of the sub-loading lever 42 and the left-hand sides of the openings 36 and 37 of the folding lever 35 when seen in Figure 3. The tension lever 49, which is movably mounted by having the pins 51 and 53 loosely introduced into openings 54 and 55 and which is also mounted on the sub-loading lever 42 by the spring 58, is also acted upon by the left sides of the openings 54 and 55 when seen in Figure 3, being pressed by the pins 51 and 53. Thus the sub-loading lever 42, the folding lever 35 and the tension lever 49 are moved forwards as one with the loading lever 17. When the levers 42, 35, 49 are moved forwards in the direction A in Figure 3 as one with the loading lever 17, the projection 75 of the folding lever 35 abuts projection 77 of the rack plate 69 so that it is shifted in the same direction E in Figure 10 as the forward movement of the shifting lever 17, with the pins 73 and 74 on the chassis plate 8 disposed in the openings 71 and 72 as guide. When the rack plate 69 is moved in this manner, the rotary folding 80 mounted on the bottom end of the first folding lever 79 meshing with the rack gear 78 of the rack plate 69 is turned so that the first folding lever 79 fast with the gear 80 is also turned in the direction F in Figure 3. When the first folding lever 79 is turned in this manner, the second folding lever 81, turnably connected to the foremost part of the first folding lever 79, travels along one side of the guide drum 2 and towards a point remote from the cassette mounting section, so as to be extended from the first folding lever 79 and follow up with rotation thereof. With the second folding lever 81 travelling in this manner, the tape 1, wound about the pole 84 on the second folding lever 81 is extracted from the cassette 3 and brought into sliding contact with the periphery of the guide drum 2. With further forward rotation of the planetary gear 26, the loading lever 17 is moved forwards, until the movement of the tension lever 49 is inhibited by abutment on the stop 50. The second folding lever 81 is locked as shown in Figure 10 when it assumes a second position with the foremost part of the pole 84 abutting on and engaging with the groove 89 of the stop 88. Since the folding lever 35 is biased by the spring 38 in the direction G in Figure 10, the rack plate 69 is pressed by the projection 75 of the folding lever 35, so that the levers 79 and 81 are kept in abutment with the stop 88 in the extended state.

As the planetary gear 26 is rotated forwardly along its circular orbit as described for forwardly shifting the loading lever 17 in the direction A in Figure 3, and bringing the levers 79 and 81 from the first unloading position in which they remain collapsed, to the second loading position in which they are extended along one side of the guide drum 2, the tension regulator 59 is simultaneously shifted from the first unloading position to the second loading position. Thus, when the reel lock of the cassette 3 is released as described above, the loading lever 17 is moved in the direction A in Figure 3, and the levers 42, 35 and 49 are moved as one with the loading lever 17, the tension regulator operating arm 61 linked to the tension regulator operating lever 49 via the arm shaft 62 is also moved in the direction A in Figure 3. When the tension regulator arm 61 is moved in this manner, the pin 97 on one end of the arm shaft 62 engaging in the cam groove 93 of the tension regulator arm 92 causes the tension regulator arm 92 to be turned from the first unloading position in which it has its foremost part lying towards the front opening side of the cassette 3 to a second loading position in which it is positioned upright and extended along the side of the apparatus, as the pin 97 is guided to travel from the foremost towards the bottom ends of the cam groove 93. The tape 1 is pulled by the foremost pin 95 of the tension regulator arm 92 so as to be extracted to the predetermined tape path.

Thus, reciprocating movement of the loading lever 17 brought about by forward rotation of the planetary gear 26 activates the loading lever unit for shifting the folding guide unit and the tension regulator 59 from the first unloading position to the second loading position to complete the first half of the loading operation in which the tape 1 is pulled from the position within cassette 3 to the predetermined tape path.

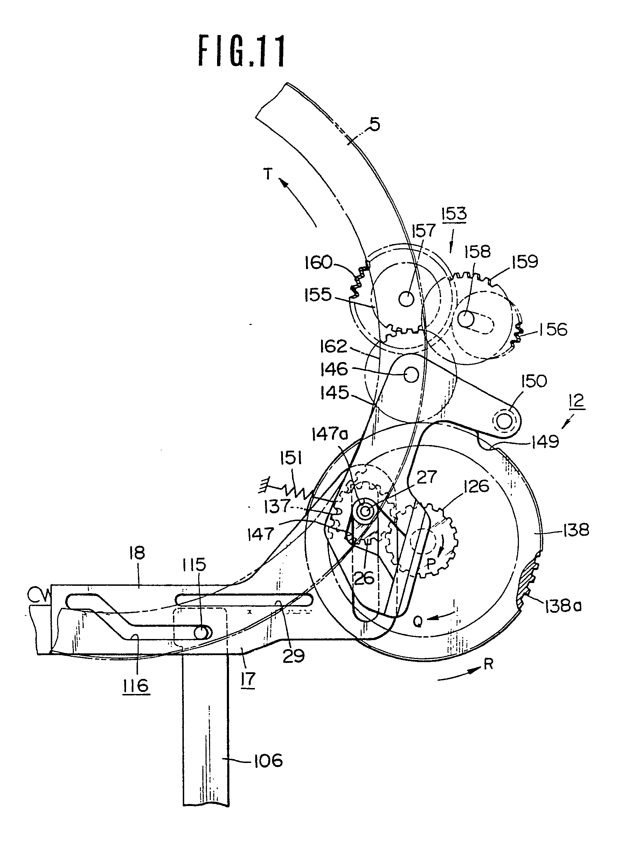

As described above, when the folding guide unit and the tension regulator 59 are shifted from the first to the second positions, the planetary gear 26 is rotated in the forward direction Q in Figure 3, and towards the left side of the ring gear 138 as shown in Figure 10, until the gear shaft 27 engages the first engaging part 147a in the recess 147 of the switching arm 145. Forward rotation of the planetary gear 26 is inhibited by abutment with the first engaging part 147a. However, since the planetary gear 26 tends to be rotated further in the forward direction, it acts for pressing the switching arm 145 for causing counter-clockwise rotation of the switching arm 145 with the stud 146 as centre as indicated by S in Figure 10, and against the bias of the spring 151. In this manner, the engaging member 150 of the switching arm 145 is disengaged from the recess 149 of the ring gear 138 to permit the ring gear 138 to be rotated in the forward direction R in Figure 11.

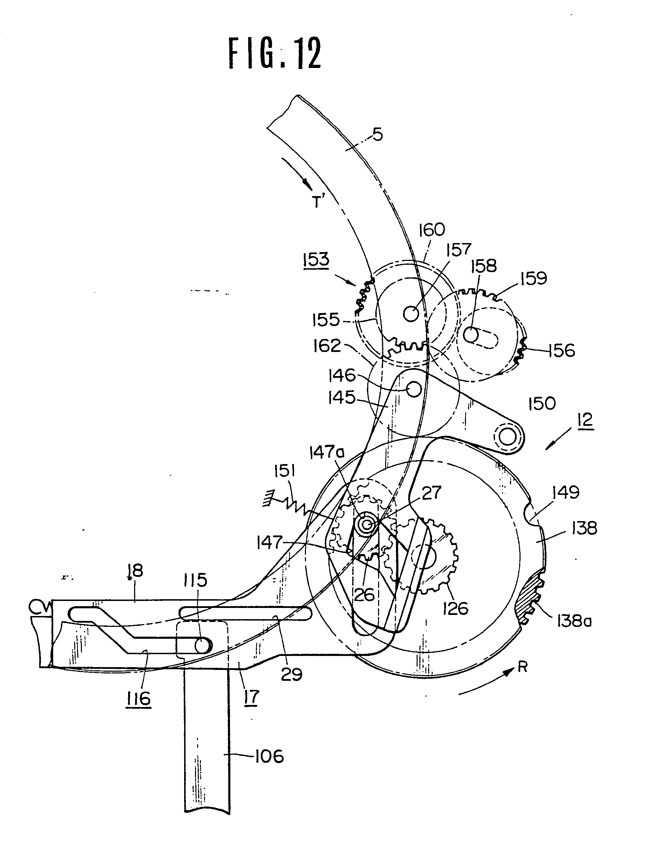

As the forward revolution of the planetary gear 26 is inhibited, and only the ring gear 138 is turned in the forward direction as indicated by R in Figure 11, rotation of the ring gear 138 is transmitted to the loading ring 5, so that it is turned in the forward direction indicated by T in Figure 11. With the ring gear 138 rotating in the forward direction, the tape 1 is placed around the guide rollers 4 and 7 and the pinch roller 10, and thus placed around the guide drum 2. It should be noted that the rotary arm 6 provided with the guide roller 7 is turned towards the outside of the loading ring 5 during forward rotation of the loading ring 5 for pulling the tape 1 out traversely of the loading ring 5. As the ring gear 138 is turned through about 330° in the direction R in Figure 12, the loading ring 5 is turned to a position facing the capstan 9 to complete the loading of the tape 1 along the predetermined tape path as shown in Figure 1. At this time, the operation of the loading electric motor 11 ceases for terminating the driving of the planetary gearing 12 and the ring gear 138. Upon termination of the loading operation, the loading ring 5 is locked by locking means provided on the chassis plate 8, so as to keep the tape 1 loaded along the predetermined pole. At this time, an operating button provided on the apparatus, such as a recording-reproduced button, may be actuated for effecting recording or reproduction with the aid of the rotary magnetic head provided on the guide drum 2.

A recording-reproducing magnetic head 170 for voice signals, a recording-reproducing magnetic head 171 (CTL head) for reference signals and an erase head 172 are provided in sliding contact with the tape 1 travelling along the predetermined tape path.

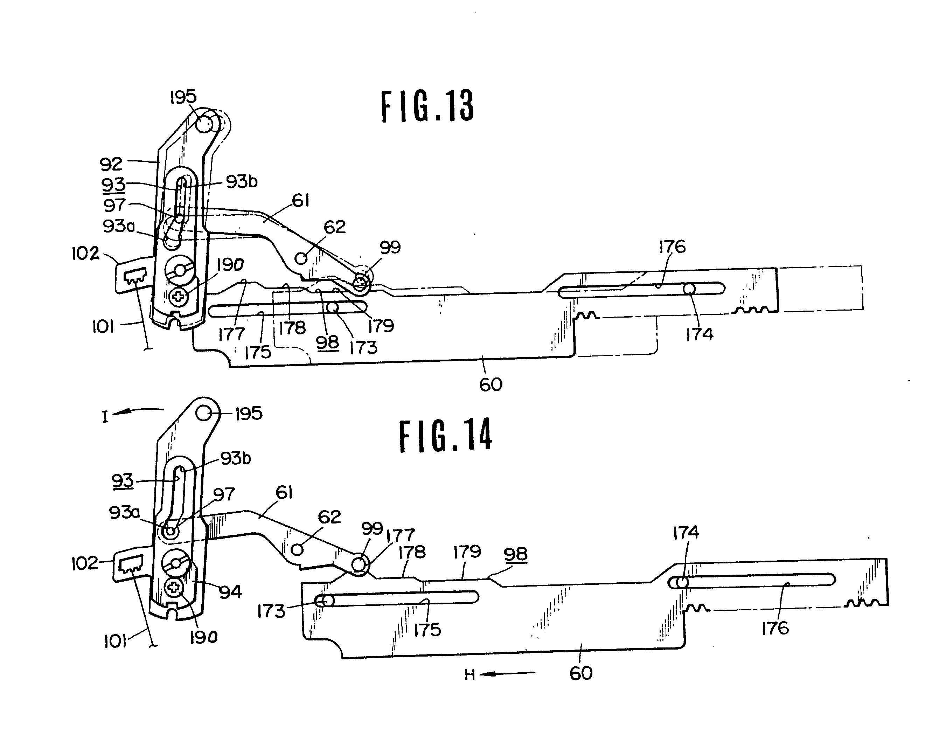

The tension regulator 59 may be turned by the operation of the mode selector lever 60 so as to be shifted to a position corresponding to the selected operating mode of the apparatus, with the tape 1 in the loaded state, as described above, for placing tension on the tape 1 in accordance with respective operating modes of the apparatus. The mode selector lever 60 that may be variably shifted in accordance with recording-reproducing mode, stop mode, fast forward and rewind mode or loading mode, is provided parallel to the loading lever 17 and along one side edge of the loading lever 17 facing the cassette mounting section. In order that the loading lever 17 may be variably slid in accordance with the operation of the mode selecting means, it is mounted by upright guide pins 173, 174 on the chassis plate 8 inserted in elongate openings 175 and 176 in the mode selector lever 60 having their long axes in the longitudinal direction of the mode selector lever 60, such that it can be slid horizontally in Figure 13. The one side edge of the mode selector lever 60 is formed with the stepped cam surface of the tension regulator arm 61. Looking from the side of the tension regulator arm 92, the cam surface 98 is formed by a first cam step 177 of maximum height corresponding to the recording-reproducing mode, a second cam step 178 of the intermediate height corresponding to the stop mode, and a third cam step 179 of minimum height corresponding to the fast forward and rewind mode and the loading mode, these three steps 177, 178 and 179 being contiguous to one another via intermediate inclined surfaces.

After termination of loading of the tape 1, the tension lever 49 is inoperative, as mentioned above, and the tension regulator arm 61 alone is turned about the shaft 62 by sliding operation of the mode selector lever 60. When the loading comes to an end and the mode selector lever 60 is not actuated, the pin 99 at the other end of the tension regulator arm 61 is engaged at the right part of the third cam step 179, the pin 97 is engaged at a lesser diameter portion 93b of the cam groove 93 and the tension regulator arm 92 is maintained at the solid-line position in Figure 13. When the recording-reproducing mode is selected, the mode selector lever 60 is shifted in the direction H in Figure 14 and the pin 99 at the other end of the tension regulator arm 61 rides on the first cam step 177, so that the tension regulator arm 61 is turned in the direction I in Figure 14 against the spring 65. The engaging pin 97 is loosely engaged in the larger diameter zone 93a at the bottom end of the cam groove 93 of the tension regulator arm 92 as shown in Figure 14. The tension regulator arm 92 is no longer restrained by the tension regulator arm 61, and may be turned about the shaft 91 in dependence upon the tension generated in the travelling tape 1. The tension regulator arm 92 is biased to rotate under the force of the spring 100 in dependence upon the tension placed on the travelling tape. The braking force of braking belt 181 of the tape supply reel 13, one end of which is engaged at an intermediate portion of the tension regulator arm 92 is suitably adjusted as a function of the arm rotation. In this manner, the rotational speed of the supply reel 15 is controlled for maintaining a constant tension on the travelling tape 1. Thus the unit described above operates as a tension regulator.

When the stop mode is selected, the pin 99 at the other end of the tension regulator arm 61 is engaged with the second cam step 178 of the mode selector lever 60 and lifted, and the tension regulator arm 61 is turned against the force of the spring 65 so that the pin 97 is engaged in the lesser diameter portion 93b of the cam groove 93 in the tension regulator arm 92. Thus the tension regulator arm 92 is shifted to a position shown by the dotted chain line in Figure 13, so that no load is placed on the tape 1 slidingly contacted with the pin 195 of the tension regulator arm 92. In this manner, the tension regulator 59 may be turned by the mode selector lever 60 for loosening the tape 1 in the loading state in the stop mode for affording protection of the tape 1.

The tape unloading operation will now be explained.

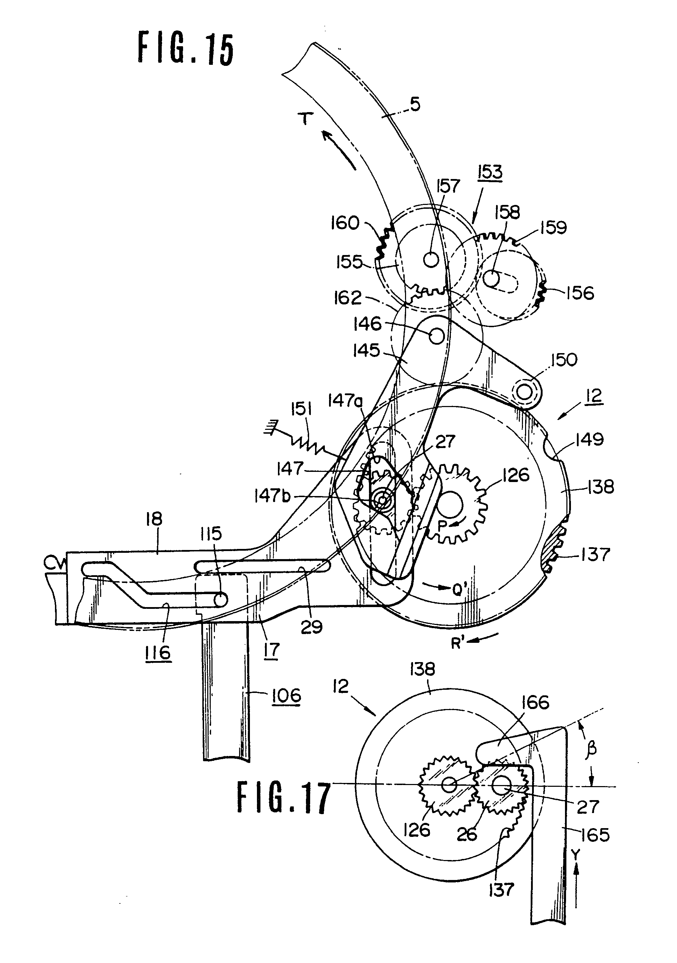

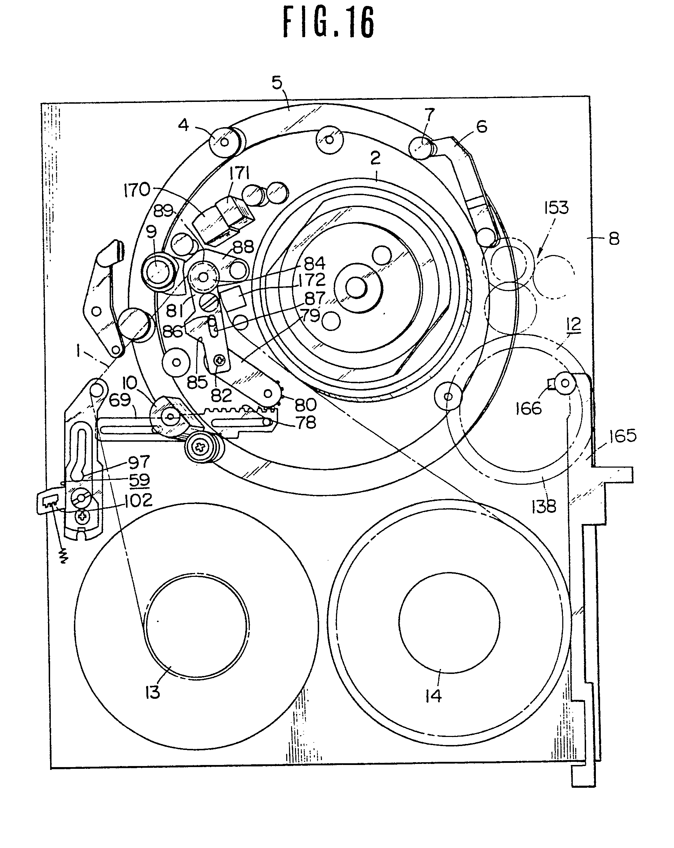

Starting from the loaded state shown in Figure 1, unloading means such as an eject button is actuated for driving the loading motor 11 in reverse, so that the sun gear 126 is driven in reverse, that is, in the direction opposite to the direction P in Figure 10. With the sun gear 126 driven in reverse, the planetary gear 26, the gear shaft 27 of which has been engaged in the first engaging part 147a of the recess 147 of the switching arm 145, is slightly rotated about the sun gear in the direction Q until it is stopped by the second engaging part 147b to be inhibited against further rotation. Thus, only the ring gear 138 is allowed to rotate in reverse in the direction Q in Figure 15. When the ring gear 138 alone is rotated in reverse while the rotation of the planetary gear 26 is inhibited, rotation of the ring gear 138 is transmitted through the connection gearing 153 to the loading ring 5 which is rotated in reverse in the direction T in figure 15. During the rotation of the loading ring 5 in reverse, the tape winding side reel block 14 is rotated for taking up the tape 1 on the tape winding reel 16. The tape 1, so far passed over pinch roller 10 and the guide roller 4 and 7 and wound about guide drum 2, is taken up on the take-up reel 16, as it is disengaged from the periphery of the guide drum 2. When the ring gear 138 is rotated through about 330° in reverse, that is, in the direction opposite to the loading direction, as mentioned above, the loading ring 5 alone is in the unloading position, while the loading lever 17 is still in the loading position and the folding guide unit is extended, while the tension regulator 59 is in the second upright position in which it has pulled out the tape 1 to its predetermined path.

When the loading ring 5 reaches its loading position shown in Figure 16, the engaging member 150 of the switching arm 145 is engaged in the recess 149 of the ring gear 138 to terminate the rotation of the ring gear 138 in reverse. The reverse torque of the sun gear 126 is then transmitted to the planetary gear 26, so that the gear shaft 27 so far engaged in the second engaging part 147b of the recess 147 of the switching arm 145 rides on a raised part 147c adjacent to the second engaging part 147b. In this manner, the planetary gear 26 clears the recess 147 and only the planetary gear 26 is rotated in reverse or in the direction opposite to Q in Figure 6. When the planetary gear 26 is so rotated, the loading lever 17 is withdrawn as indicated by B in Figure 10, the sub-loading lever 42 is also withdrawn as indicated by B in Figure 10 under the traction of the spring 48 and the projection 76 provided to the sub-loading lever 42 abutting on the projection 77 of the rack plate 69. As the planetary gear 26 is rotated in reverse, and the sub-loading lever 17 withdrawn, the sub-loading lever 42, the folding lever 35 and the tension regulator lever 49 are withdrawn in the direction B in Figure 10 as one with the loading lever 17. Then the rack plate 69 is pushed in the same direction by the projection 76 of the sub-loading lever 42, and the rack plate 69 is shifted in the direction in which the loading lever 17 is withdrawn, that is, in the direction opposite to E in Figure 10, with the pins 73 and 74 of the chassis plate 8 engaging in the openings 71 and 72 and serving as guide. When the rack plate 69 is shifted in this manner, the rotary gear 80 provided at the bottom end of the first folding lever 79 of the folding guide unit and meshing with the rack gear 78 of the rack plate 69 is turned clockwise in Figure 10, and the first folding lever 79 fast with the rotary gear 80 is turned in the direction F in Figure 10. When the first folding lever 79 is turned in this manner, the second folding lever 81 turnably connected to the forward end of the first folding lever 79 is shifted from one side of the guide drum 2 towards the cassette mounting section as it is collapsed from its extended state onto the first folding lever 79 with the pin 86 being guided in the groove 85 in the chassis plate 8. When the second folding lever 81 is shifted as indicated above, the tape 1 wound about the pole 84 of the second folding lever 81 is withdrawn and taken up about the winding reel 16 in the cassette 3.

As the first and second folding levers 79 and 81 of the folding guide unit are folded as indicated above, the tension regulator 59 is also shifted simultaneously from its second loading position to the first unloading position. Thus the tension regulator arm 61 is also shifted in the direction B in Figure 10 as a result of the tension lever 49 withdrawing as one with the loading lever 17. When the tension regulator arm 61 is shifted as indicated above, the pin 97 of the rotary arm 62 engaged in the cam groove 93 of the tension regulator arm 92 is engaged in the lesser diameter portion 93b of the cam groove 93 for turning the tension regulator arm 92 from the second or loading position to the first or unloading position shown in Figure 3. This terminates the unloading operation. Upon termination of unloading of the tape 1, the planetary gear 26 is not returned to the starting position shown in Figure 3, but it is being rotated in reverse, in such a manner that the pin 115 of the vertical section 108 of the lock release lever 106 is located somewhere between the lower cam surface 116c and the inclined cam surface 116a of the cam groove 116 of the loading lever 17, and the lock release lever 106 is inoperative so that the pawls 118 and 119 of the cassette 3 are inoperative. That is, the reels 15 and 16 remain in the unlocked state during tape unloading. When the planetary gear 26 is rotated further in reverse for withdrawing the loading lever 17, the pin 115 of the lock release lever 106 clears the inclined cam surface 116a to ride on the upper cam surface 116b. Thus the lock release lever 106 is raised towards the guide drum 2 for raising the lock pawl mounting element 120 in the cassette 3 and opening the pawls 118 and 119 so as to engage them in the engaging portions 125 of the reels 15 and 16 so locking them. At this time, the planetary gear 26 has returned to its starting position shown in Figure 3.

When the planetary gear 26 has returned to the loading starting position shown in Figure 3, the loading lever 17 is at the extreme right position in Figure 3, so that the sub-loading lever 42 is pulled by the tension spring 48 and the projection 77 of the rack plate 69 is pressed and held by the projection 76 of the sub-loading lever 42 for inhibiting movement of the rack plate 69 and actuation of the folding guide unit. Similarly, the tension lever 49 is biased by the spring 58 towards the foremost part of the sub-loading lever 42 for inhibiting movement of the tension regulator 59 and preventing untimely extraction of the tape 1.

During its reverse rotation, the planetary gear 26 makes an additional reverse rotation of a present angle β from the starting position of Figure 3, as shown in Figure 17. By this additional rotation of the angle β, the cassette lock release lever 165, whose engaging pawl piece 166 is engaged with the gear shaft 27 of the planetary gear 26 in the start position, is shifted in the direction Y in Figure 17. Then, locking of the cassette holder is released and the cassette 3 is ready to be extracted from the cassette mounting section. When the planetary gear 26 has been rotated in reverse by the angle β, the loading motor 11 is driven in the forward direction for turning the planetary gear 26 in the forward direction through the sun gear 126. When the planetary gear 26 is returned to the starting position shown in Figure 3, the operation of the loading motor 11 ceases for completing the unloading operation.

Since locking of the cassette 3 is released to permit its extraction only after the tape 1 has been rewound in the cassette 3, untimely extraction of the cassette 3 from the cassette holder is prevented.

Since the additional stroke is provided for the reverse rotation of the planetary for the reverse rotation of the planetary gear 26 for releasing the cassette lock release lever 165, and the loading lever 17 is subjected to a slight movement in the direction A in Figure 3 during the additional reverse rotation of the planetary gear 26, the profile of the cam groove 116 or the mounting mode of the sub-loading lever 42 to the loading lever 17 needs be selected such that the reel lock release lever 106 or the sub-loading lever 42 is not operated by movement of the loading lever 17. It is preferred that the cassette lock release lever 165 be provided at right angles to the loading lever 17 so that the effect of the movement of the planetary gear 26 aimed at shifting the cassette lock release lever 165 can be substantially eliminated.

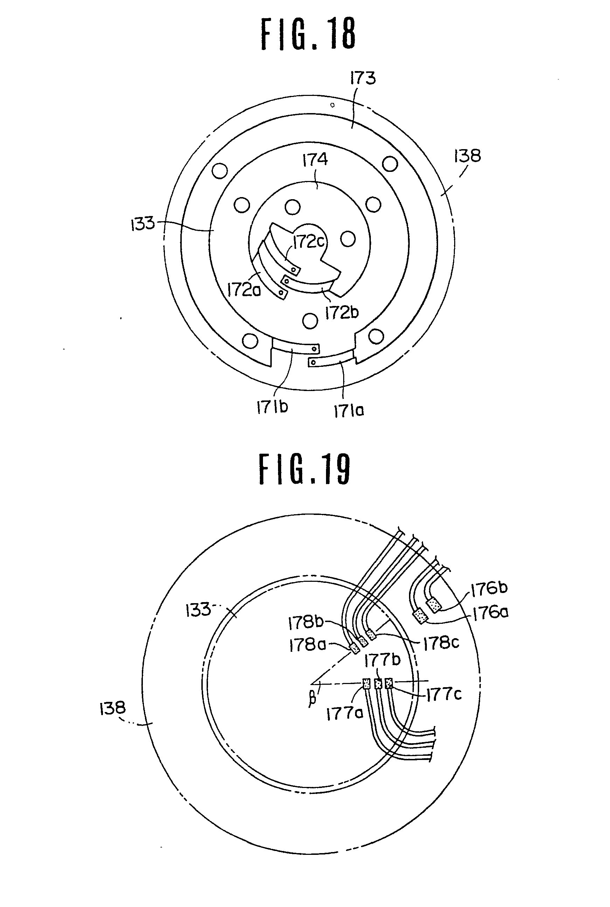

The operation for stopping or reversing the operation of the loading motor 11 for driving the loading ring 5 and the planetary gearing 12 is effected by a switching unit provided between the chassis plate 8 and the planetary gearing 12. This switching unit comprises a pair of first contactors 171a and 171b formed on the lower surface of the ring gear 138 of the planetary gearing 12 opposite to the chassis plate 8 as shown in Figure 18, and a set of second contractors 172a, 172b and 172c formed on the lower surface of the planetary gear mounting plate 133 opposite to the chassis plate 8, as shown in Figure 18. The first contractors 171a and 171b are integrally connected in a facing relation to each other to both ends of an annular connecting piece 183 made of an electrically conductive metal strip and corresponding in profile to the outside perimeter of the ring gear 138, and are mounted on the lower surface of the ring gear 138 through the connecting piece 183. The second contactors 172a, 172b, 172c are integrally connected to both ends of an annular connecting piece 184 made of an electrically conductive metal sheet or strip and corresponding substantially to the outside perimeter of plate 133, so that the two contactors 172a and 172c face the contactor 172b. When the ring gear 138 and the mounting plate 133 are made of metal or the like conducting material, the first contactors 171a and 171b as well as the second contactors 172a, 172b and 172c need to be mounted with interposition of suitable insulating material. As shown in Figure 19, ring gear end position sensing switch patterns 176a and 176b are formed on the chassis plate 8 as by pattern printing for sensing the rotational end positions of the ring gear 138. Similarly, start position sensing switch patterns 177a, 177b, 177c and reversing position sensing switch patterns 178a, 178b, 178c are formed on the chassis plate 8 as by pattern printing for sensing the rotation start position and the reverse position of the planetary gear 26, respectively, the planetary gear 26 making a revolution on a circular orbit as one with the planetary gear mounting plate 133. The end position sensing switch gear patterns 176a and 176b for sensing the end position of the ring gear 138 are provided on the ring gear 138 at positions slidingly contacting with the first contactors 171a and 171b when the ring gear 138 has completed its partial forward rotation to complete the winding of the tape 1 about the guide drum 2 by the loading ring 5. The arrangement is so made that, when the ring gear 138 reaches the above position, an electrical connection across the switch patterns 176a and 176b is established by means of the first contactors 171a and 171b.

The switch patterns 177a, 177b 177c for sensing the start position of the planetary gear 26 are located so as to be slidingly connected with the second contactors 172a, 172b and 172c mounted on the planet gear mounting plate 133. The reversing position sensing switch patterns 178a, 178b and 178c are located for slidingly contacting the second contactors 172a, 172b and 172c when the planetary gear 26 reaches the position of the angle β past its start position for releasing the cassette lock release lever 165 as shown in Figure 17. The arrangement is such that, when the planetary gear 26 reaches the aforementioned positions, an electrical connection is established across the switch patterns 177a, 177b and 177c; 178a, 178b and 178c by means of the second contactors 172a, 172b and 172c.

If the loading motor 11 is rotated forward during loading and the planetary gear 26 is driven forward along its circular orbit until it is engaged in the recess 147 of the switching arm 145, the ring gear 138 is then driven forwardly for causing rotation of the loading ring 5 to a position for completing the rotation of the tape 1 about the guide drum 2. When the electrical connection is established at this time across the first contactors 171a and 171b and the end position sensing switch patterns, a stop signal is entered in the driving circuit of the loading motor 11 for stopping it and terminating the loading operation. It is also supposed that, during unloading, the loading motor 11 is driven in reverse, the ring gear 138 is driven first in reverse to release the winding of the tape 1 about the guide drum 2, the engaging member 150 of the switching arm 145 engaging in the recess 149 of the ring gear 138, and the ring gear 138 being returned to its start position. It is also supposed that the planetary gear 26 is rotated in reverse for returning the loading lever 17 and the planetary gear 26 is rotated in reverse by the excess stroke of the angle β past the start position for releasing the cassette lock release lever 165, the second contactors 172a, 172b and 172c then slidingly contacting with the reverse position sensing patterns 178a, 178b and 178c for establishing the electrical connection across the patterns 178a, 178b and 178c. A drive reversing signal is then entered in the driving circuit of the loading motor 11 so that it is driven forwardly. When the loading motor 11 is driven forwardly so that the planetary gear 26 is driven forwardly and the second contactors 172a, 172b and 172c are slidingly contacted with the start position sensing switch patterns 176a, 176b and 176c for establishing an electrical connection across the switch patterns 176a, 176b and 176c, a stop signal is entered in the driving circuit of the loading motor 11 for stopping it. Thus the unloading operation is terminated with the planetary gear 26 being restored to its starting position.

By providing the switch unit between the planetary gearing 12 and the chassis plate 8 for controlling the driving of the loading motor 11, micro-switches previously employed for sensing the position of the tension regulator or the predetermined rotational positions of the loading ring may be dispensed with, thus saving the space and reducing the size of the apparatus.

In the magnetic recording and reproducing apparatus described above, the magnetic tape unloading operation is performed in two stages, namely, the first stage of unloading the magnetic tape from the tape guide drum, and the ensuring second stage of unloading the tape from the tension regulator, folding guide unit and the tape guide means except the tape guide drum, so that, in the event that the magnetic tape should become adhered to the tape guide drum, it can be positively peeled off from the tape guide drum for tape unloading without causing any injury to the tape.

Moreover, the loading lever is driven by the planetary gearing driving in turn the loading ring in partial rotation, said loading lever driving the folding guide unit and the tension regulator for pulling out and guiding the magnetic tape from the tape cassette mounting section towards the tape guide drum which is equipped with the rotary magnetic heads. In this manner, tape loading and unloading may be effected by a single driving means, thus making it possible to reduce the overall size of the apparatus. In addition, since the folding guide unit is used as means for pulling out and guiding the magnetic tape from the tape cassette mounting section towards the tape guide drum, the magnetic tape can be pulled out to distant points by means of the small-sized device, thus making it possible to reduce further the overall size of the apparatus.

In addition, the loading ring is mounted at an angle relative to the plane of the chassis plate which is the mounted plane of the ring gear and connected to the ring gear by a pair of bevel gears one of which has a shaft perpendicular to the plane of the loading ring and the other of which has a shaft perpendicular to the plane of the chassis plate, while the lines connecting these shafts are parallel to the line of maximum inclination of the loading ring plane. Thus a spur gear may be used as the loading ring gear, so that the loading ring can be machined easily and accurately. The loading ring can be accurately connected to the connection gearing for transmitting the driving torque of the motor, while the mounting space may be reduced.

Embodiments of magnetic recording and reproducing apparatus according to the present invention may be advantageously used in video tape recorders and especially in portable video tape recorders.

## Claims

1. A magnetic recording and reproducing apparatus comprising:

a tape guide drum (2) provided with rotary magnetic heads;

a loading ring (5), rotatable by rotational driving means (11, 26, 138), for winding a magnetic tape (1) on the periphery of said tape guide drum (2);

tape guide means (84) for drawing out said tape (1) from a cassette (3) and guiding said tape (1) from a tape mounting section towards and along a predetermined tape path in a direction around said tape guide drum (2), said loading ring (5) intercepting said tape (1) guided by said tape guide means (84) for winding said tape (1) around the periphery of said tape guide drum (2); and

a loading lever (17) operated by said rotational driving means (11, 26, 138) for moving said tape guide means (84);

characterized by:

said rotational driving means (11, 26, 138) comprising a planetary gearing unit (26, 138);

a tape tension regulator (59) contacting said tape (1) drawn out by said tape guide means (84) and cooperating with said loading lever (17); and

means (49, 69) cooperating with said loading lever (17) and driven by said planetary gearing unit (26, 138) for moving said tape tension regulator (59) between an unloading position and a loading position in response to the motion of said loading lever (17), whereby the winding of said tape (1) on said tape guide drum (2) is released by rotationally driving said loading ring (5) by said planetary gearing unit (26, 138), and said loading lever (17) is then operated for shifting said tape tension regulator (59) and said tape guide means (84) to their respective unloading positions out of engagement with said tape (1) for returning said tape (1) towards said tape mounting section.

2. Apparatus according to claim 1 wherein said planetary gearing unit (26, 138) includes a ring gear (138) rotatably mounted on a chassis (8) of the apparatus and arranged to rotate said loading ring (5), said loading ring (5) being mounted at an angle with respect to a plane perpendicular to a rotational axis of said ring gear (138), said loading ring (5) being connected to said ring gear (138) by a pair of mutually meshing bevel gears (155, 156), one of which has a shaft (159) perpendicular to the plane of the loading ring (5) and the other of which has a shaft (158) perpendicular to the plane in which said ring gear (138) is mounted, with a line interconnecting said shafts (157, 158) being parallel to the line of maximum inclination of the loading ring plane.

3. Apparatus according to claim 1 or claim 2 wherein said loading lever (17) has associated gear means (78) for shifting said tape guide means (84) between an unloading position and a loading position by the motion of said loading lever (17), said tape guide means (84) drawing out and guiding said tape (1) from said tape mounting section to said tape guide drum (2) in response to said means (49, 69) for shifting said tension regulator (59) from said unloading to said loading position.

4. Apparatus according to claim 1, claim 2 or claim 3 wherein said planetary gearing unit (26, 138) includes a planetary gear (26) and a ring gear (138), and further comprising a cassette lock release lever (165) for releasing a lock of a cassette holder holding said cassette (3) in a cassette mounting section, said cassette lock release lever (165) having a forward end in a circular orbit of said planetary gear (26) so that said cassette lock release lever (165) is actuated by motion of said planetary gear (26) along its circular orbit.

5. Apparatus according to claim 4 wherein said rotational driving means (11, 26, 138) further comprising an electric motor (11) for driving said loading ring (5), and further comprising means (171ab, 172abc, 176ab, 177abc, 178abc) for controlling the operation of said electric motor (11) in dependence upon the position of said planetary gear (26) in said circular orbit.

**Patentansprüche**

1. Magnetisches Aufzeichnungs- und Wiedergabegerät

mit einer mit rotierenden Magnetköpfen ausgestatteten Bandführungstrommel (2),

mit einem durch Drehantriebsmittel (11, 26, 138) drehbaren Ladering (5) zum Legen eines Magnetbands (1) um die umfangsfläche der Bandführungstrommel (2),

mit Bandführungsmitteln (84) zum Herausziehen des Magnetbandes (1) aus einer Kassette (3) und zum Führen des Bandes (1) aus einem Bandeinsetzbereich zu und entlang einem vorbestimmten Bandweg in einer um die Bandführungstrommel (2) führenden Richtung, wobei der Ladering (5) das von den Bandführungsmitteln (84) geführte Magnetband (1) aufnimmt, um es um die Umfangsfläche der Bandführungstrommel (2) zu legen,

sowie mit einem von den Drehantriebsmitteln (II, 26, 138) betätigen Ladehebel (17) zum Bewegen der Bandführungsmittel (84),

dadurch gekennzeichnet,

daß die Drehantriebsmittel (11, 26, 138) eine Planetengetriebeeinheit (26, 138) umfassen,

daß ein Bandspannungsregler (59) vorgesehen ist, der das von den Bandführungsmitteln (84) herausgezogene Magnetband (1) berührt und mit dem Ladehebel (17) zusammenwirkt,

und daß Mittel (49, 69) vorgesehen sind, die mit dem Ladehebel (17) zusammenwirken und von der Planetengetriebeeinheit (26, 138) angetrieben werden, um den Bandspannungsregler in Abhängigkeit von der Bewegung des Ladehebels (17) zwischen einer Entladeposition und einer Ladeposition zu bewegen, wodurch das Legen des Magnetbandes (1) um die Bandführungstrommel (2) durch Drehen des Laderings (5) von der Planetengetriebeeinheit (26, 138) ausgelöst wird und der Ladehebel (17) dann so betätigt wird, daß er den Bandspannungsregler (59) und die Bandführungsmittel (84) in ihre jeweiligen Entladepositionen verschiebt, in denen sie nicht an dem Magnetband (1) angreifen, um das Magnetband (1) zu dem Bandeinsetzbereich zurückzuführen.

2. Gerät nach Anspruch 1, bei dem die Planetengetriebeeinheit (26, 138) einen Zahnring (138) umfaßt, der auf einem Chassis (8) des Geräts drehbar montiert und so angeordnet ist, daß er den Ladering (5) dreht, wobei der Ladering (5) unter einem Winkel gegenüber einer zur Rotationsachse des Zahnrings (138) senkrechten Ebene montiert ist, wobei der Ladering (5) über ein Paar miteinander kämmender Kegelzahnräder (155, 156) mit dem Zahnring (138) verbunden ist, wobei die Welle (157) eines dieser Kegelzahnräder zur Ebene des Laderings (5) senkrecht steht und die Welle (158) des anderen Kegelzahnrads senkrecht zu der Ebene verläuft, in der der Zahnring (138) montiert ist, wobei eine Linie, die diese Wellen (157, 158) verbindet, parallel zu der Linie maximaler Neigung der Ebene des Laderings verläuft.

3. Gerät nach Anspruch 1 oder 2, bei dem dem Ladehebel (17) Zahnradmittel (78) zugeordnet sind, durch die die Bandführungsmittel (84) durch Bewegen des Ladehebels (17) zwischen einer Entladeposition und einer Ladeposition verschiebbar sind, wobei die Bandführungsmittel (84) das Magnetband (1) in Abhängigkeit von den genannten Mitteln (49, 69) zum verschieben des Bandspannungsreglers (59) aus der Entladeposition in die Ladestellung aus dem Bandeinsetzbereich herausziehen und zu der Bandführungstrommel (2) führen.

4. Gerät nach Anspruch 1, 2 oder 3, bei dem die Planetengetriebeeinheit (26, 138) ein Planetenrad (26) und einen Zahnring (138) aufweist, und bei dem ein Kassettenverriegelungs-Lösehebel (165) zum Lösen der verriegelung eines Kassettenhalters vorgesehen ist, der die Kassette (3) in einem Kassetten-Einsetzbereich hält, wobei dieser Kassettenverriegelungs-Lösehebel (165) mit einem vorderen Endbereich in einer kreisförmigen Umlaufbahn des Planetenrades (26) liegt, derart daß der Kassettenverriegelungs-Lösehebel (165) durch die Bewegung des Planetenrads (26) längs seiner kreisförmigen Umlaufbahn betätigt wird.

5. Gerät nach Anspruch 4, bei dem die Drehantriebsmittel (11, 26, 138) ferner einen Elektromotor (11) zum Antreiben des Laderings (5) umfassen, und bei dem Mittel (171ab, 172abc, 176ab, 177abc, 178abc) vorgesehen sind, die die Funktion des Elektromotors (11) in Abhängigkeit von der Position des Planetenrads (26) in der kreisförmigen Umlaufbahn steuern.

**Revendications**

1. Appareil d'enregistrement et de lecture magnétique comprenant un tambour de guidage de bande (2) pourvu de têtes magnétiques rotatives;

une bague de chargement (5), pouvant être entraînée en rotation par un moyen d'entraînement en rotation (11, 25, 138), afin d'enrouler une bande magnétique (20) sur la périphérie du tambour de guidage de bande (2);

un moyen de guidage de bande (84) pour extraire la bande (1) d'une cassette (3) et guider la bande (1) depuis un ensemble de montage de bande vers et le long d'un chemin de bande prédéterminé selon une direction entourant le tambour de guidage de bande (2), une bague de chargement (5) interceptant la bande (1) guidée par le moyen de guidage de bande (4) pour enrouler la bande (1) autour de la périphérie du tambour de guidage de bande (2); et

un levier de chargement (17) actionné par un moyen d'entraînement en rotation (11, 26, 138) pour déplacer le moyen de guidage de bande (84);

caractérisé en ce que:

le moyen d'entraînement en rotation (11, 26, 138) comprend une unité d'engrenage planétaire (26, 138);

un régulateur de tension de bande (59) entre en contact avec la bande (1) extraite du moyen de guidage de bande (84) et coopère avec le levier de chargement (17); et en ce que

un moyen (49, 69) coopérant avec le levier de chargement (17) est entraîné par l'unité d'engrenage planétaire (26, 138) afin de déplacer le régulateur de tension de bande (59) entre une position de déchargement et une position de chargement en réponse au mouvement du levier de chargement (17), par lequel l'enroulement de la bande (1) sur le tambour de guidage de bande (2) est libéré par un entraînement en rotation de la bague de chargement (5) provoqué par l'unité d'engrenage planétaire (26, 138), le levier de chargement (17) étant alors actionné pour déplacer le régulateur de tension de bande (59) et le moyen de guidage de bande (84) vers des positions de déchargement respectives hors de contact avec la bande (1) pour faire retourner la bande (1) vers l'unité de montage de bande.

2. Appareil selon la revendication 1, dans lequel l'unité d'engrenage planétaire (26, 138) comprend une roue dentée de bague (138) montée en rotation sur un châssis (8) de l'appareil et disposée pour faire tourner la bague de chargement (5), la bague de chargement (5) étant montée selon un certain angle par rapport à un plan perpendiculaire à l'axe de rotation de la roue dentée de bague (138), la bague de chargement (5) étant reliée à la roue dentée de bague (138) par une paire de pignons coniques mutuellement en prise (155, 156), l'un d'entre eux ayant un axe (159) perpendiculaire au plan de la bague de chargement (5) et l'autre ayant un axe (158) perpendiculaire au plan de montage de la roue dentée de bague (138) de façon à ce qu'une ligne reliant les axes (157, 158) soit parallèle à la ligne d'inclinaison maximum du plan de la bague de chargement.

3. Appareil selon la revendication 1 ou la revendication 2, dans lequel le levier de chargement (17) comporte un moyen de roue dentée associé (78) destiné à déplacer le moyen de guidage de bande (84) entre une position de déchargement et une position de chargement du fait du mouvement du levier de chargement (17), le moyen de guidage de bande (84) extrayant et guidant la bande (1) depuis l'ensemble de montage de bande vers le tambour de guidage de bande (2) en réponse au moyen (49, 69) de déplacement du régulateur de tension (50) depuis la position de déchargement vers la position de chargement.

4. Appareil selon la revendication 1 ou la revendication 2 ou la revendication 3, dans lequel l'unité d'engrenage planétaire (26, 138) comprend une roue dentée planétaire (26) et une roue dentée de bague (138), et comprend en outre un levier de libération de vérouillage de cassette (165) pour libérer un vérouillage d'un support de cassette supportant la cassette (3) dans un ensemble de montage de cassette, le levier de libération de vérouillage de cassette (165) ayant une extrémité avant dans une orbite circulaire de la roue dentée planétaire (26) de sorte que le levier de libération de vérouillage de cassette (165) soit actionné par le mouvement de la roue dentée planétaire (26) le long de son orbite circulaire.

5. Appareil selon la revendication 4, dans lequel le moyen d'entraînement en rotation (26, 138) comprend en outre un moteur électrique (11) pour entraîner la bague de chargement (5) et comprend en outre un moyen (171ab, 172abc, 176ab, 177abc, 178abc) pour commander le fonctionnement du moteur électrique (11) en fonction de la position de la roue dentée planétaire (26) dans l'orbite circulaire.

# FIG.1

EP 0 142 565 B1

FIG.2

2

FIG.3

# FIG.4

# FIG.5

EP 0 142 565 B1

# FIG.6

# FIG.7

# FIG.8

# FIG.9

6

FIG.10

EP 0 142 565 B1

# FIG.11

EP 0 142 565 B1

# FIG.12

FIG.13

FIG.14

FIG.15

FIG.17

11

# FIG.16

# FIG. 18

173

174

138

133

172c

172a

172b

171b    171a

# FIG. 19

133

138

β

178b
178a

178c

177b

177a

177c

176b

176a